# EUROPEAN PATENT APPLICATION

(11) **EP 4 239 755 A1**
(43) Date of publication of application: **06.09.2023**
(21) Application number: 22785674.7
(22) Date of filing: 27.04.2022
(51) Int. Cl.: H01M 10/44

(54) **BATTERY ENERGY RECOVERY METHOD AND DEVICE, BATTERY MANAGEMENT SYSTEM, AND BATTERY**

(30) Priority: 14.01.2022 CN 202210044608
(71) Applicant: Contemporary Amperex Technology Co., Limited, Ningde City, Fujian 352100 (CN)
(72) Inventor: ZHOU, Xiang, Ningde, Fujian 352100 (CN); LIU, Jiang, Ningde, Fujian 352100 (CN)
(74) Representative: Gong, Jinping
(86) International application number: PCT/CN2022/089620
(87) International publication number: WO 2023/134059

(57) **Abstract**

This application relates to the field of battery technologies and discloses a method and an apparatus for battery energy recovery, a battery management system, and a battery. The method includes: sending a charge/discharge instruction to a battery pack, so that the battery pack alternately outputs a charge signal and a discharge signal according to the charge signal when a vehicle is traveling; and performing battery energy recovery for the vehicle according to the charge signal. In the method and the apparatus for battery energy recovery, the battery management system, and the battery in this application, the charge signal and the discharge signal are alternately output so as to perform battery energy recovery under a condition corresponding to the charge instruction. In this way, endurance mileage of the vehicle is effectively increased and degradation speed of the battery is reduced.

## Description

### CROSS-REFERENCE TO RELATED APPLICATIONS

This application claims priority to Chinese patent application No. 202210044608.9, filed on January 14, 2022 and entitled "METHOD AND APPARATUS FOR BATTERY ENERGY RECOVERY, BATTERY MANAGEMENT SYSTEM, AND BATTERY", which is incorporated herein by reference in its entirety.

### TECHNICAL FIELD

This application relates to the field of battery technologies, and in particular, to a method and an apparatus for battery energy recovery, a battery management system, and a battery.

### BACKGROUND

At present, electric vehicles start an energy recovery policy at braking, with which a maximum charge capacity of recovered energy is calculated according to braking conditions and battery pack status, so as to recover battery energy. Such battery energy recovery policy requires a brake signal and makes full use of the charge capacity of batteries.

In the prior art, as energy recovery is performed over long time with the maximum capacity of batteries being approached, degradation of the batteries is accelerated.

### SUMMARY

Embodiments of this application at least partially alleviate the above problem, allowing effective recovery of battery energy and reducing the degradation speed of batteries.

To resolve the foregoing technical problem, one technical solution in the embodiments of this application is as follows: according to a first aspect, an embodiment of this application provides a method for battery energy recovery, where the method includes: sending a charge/discharge instruction to a battery pack, so that the battery pack alternately outputs a charge signal and a discharge signal according to the charge/discharge instruction when a vehicle is traveling; and performing battery energy recovery for the vehicle according to the charge signal. In this embodiment of this application, the charge signal and the discharge signal are alternately output, and battery energy recovery is performed under a condition corresponding to the charge signal. In this way, not only endurance mileage of electric vehicles can be effectively increased, but also degradation speed of batteries can be reduced.

In some embodiments, the sending a charge/discharge instruction to a battery pack, so that the battery pack alternately outputs a charge signal and a discharge signal according to the charge/discharge instruction when a vehicle is traveling includes: sending a pulse charge/discharge instruction to the battery pack, so that the battery pack alternately outputs a pulse charge signal and a pulse discharge signal according to the pulse charge/discharge instruction when the vehicle is traveling; and the performing battery energy recovery for the vehicle according to the charge signal includes: performing battery energy recovery for the vehicle according to the pulse charge signal. Such step pulse charge or discharge method at different rates can effectively suppress accumulated polarization of batteries during continuous charge and discharge, and enhance pulse charging capability, thus improving energy recovery efficiency while increasing service life of the batteries.

In some embodiments, the sending a pulse charge/discharge instruction to the battery pack, so that the battery pack alternately outputs a pulse charge signal and a pulse discharge signal according to the pulse charge/discharge instruction when the vehicle is traveling includes: obtaining speed information of the vehicle when it is traveling, and sending the pulse charge/discharge instruction to the battery pack based on the speed information, so that the battery pack alternately outputs the pulse charge signal and the pulse discharge signal based on the speed information. The outputting of the pulse charge signal and the pulse discharge signal may be determined based on a traveling speed of the vehicle, which can not only realize battery energy recovery and alleviate the degradation of batteries, but can also make current electric energy consumption of the vehicle match a traveling state of the vehicle, thereby improving performance of the vehicle and ensuring driving experience of a user.

In some embodiments, that the battery pack alternately outputs the pulse charge signal and the pulse discharge signal based on the speed information includes: under a condition that the speed information indicates that the vehicle is in an accelerating state, controlling discharge power of the pulse discharge signal output by the battery pack to be greater than charge power of the pulse charge signal; under a condition that the speed information indicates that the vehicle is in a decelerating state, controlling the discharge power of the pulse discharge signal output by the battery pack to be less than the charge power of the pulse charge signal; and under a condition that the speed information indicates that the vehicle is in a constant speed state, controlling the discharge power of the pulse discharge signal output by the battery pack to be equal to the charge power of the pulse charge signal. In this embodiment of this application, battery energy recovery may be performed in the accelerating state, the decelerating state, and the constant speed state of the vehicle, featuring wide application and high flexibility.

In some embodiments, when the vehicle is in the accelerating state or the decelerating state, the method further includes: when the vehicle reaches a target speed, controlling the discharge power of the pulse discharge signal output by the battery pack to be equal to the charge power of the pulse charge signal. In this embodiment of this application, the vehicle can be controlled to travel at a constant speed after it reaches the target speed, with its charge and discharge to be kept in a target state based on the target speed. In the target state, capacity discharged at constant current can just meet the needs of the vehicle. In this way, not only the endurance mileage of electric vehicles can be effectively increased, but also service life of the battery pack is significantly increased.

In some embodiments, the sending a pulse charge/discharge instruction to the battery pack, so that the battery pack alternately outputs a pulse charge signal and a pulse discharge signal according to the pulse charge/discharge instruction when the vehicle is traveling includes: according to pulse charge and pulse discharge, and/or pulse charge, pulse discharge, and standing, determining at least one alternate charge/discharge pattern; and sending the at least one alternate charge/discharge pattern to the battery pack, so that the battery pack outputs the pulse charge signal and the pulse discharge signal according to the at least one alternate charge/discharge pattern. In this embodiment of this application, pulse charge/discharge processes may be diversified, and the pulse charge or discharge may be performed in steps at different rates. In this way, the accumulated polarization of batteries during continuous charge and discharge can be effectively suppressed, and the pulse charging performance is improved, thereby improving the energy recovery efficiency and increasing the service life of batteries. In addition, the method may be flexibly applied to different application scenarios.

In some embodiments, the sending a charge/discharge instruction to a battery pack, so that the battery pack alternately outputs a charge signal and a discharge signal according to charge/discharge instruction when a vehicle is traveling includes: sending a constant current charge/discharge instruction to the battery pack, so that the battery pack alternately outputs a constant current charge signal and a constant current discharge signal according to the constant current charge/discharge instruction when the vehicle is traveling; and the performing battery energy recovery for the vehicle according to the charge signal includes: performing battery energy recovery for the vehicle according to the constant current charge signal. The constant current charge signal and the constant current discharge signal are alternately output, which can not only effectively increase the endurance mileage of electric vehicles, but can also reduce the degradation speed of batteries.

According to a second aspect, the embodiments of this application provide an apparatus for battery energy recovery, where the apparatus includes: an instruction sending module, configured to send a charge/discharge instruction to a battery pack, so that the battery pack alternately outputs a charge signal and a discharge signal according to the charge/discharge instruction when a vehicle is traveling; and a battery energy recovery module, configured to perform battery energy recovery for the vehicle according to the charge signal. In this embodiment of this application, the charge signal and the discharge signal are alternately output, and battery energy recovery is performed under a condition corresponding to the charge signal. In this way, the endurance mileage of electric vehicles can be effectively increased, and the degradation speed of batteries can be reduced.

According to a third aspect, the embodiments of this application provide a battery management system, including: at least one processor, and a memory communicatively connected to the at least one processor, where the memory stores an instruction executable by the at least one processor, and when the instruction is executed by the at least one processor, the at least one processor is caused to perform the foregoing method. In this embodiment of this application, the charge signal and the discharge signal are alternately output, and battery energy recovery is performed under a condition corresponding to the charge signal. In this way, the endurance mileage of electric vehicles can be effectively increased, and the degradation speed of batteries can be reduced.

According to the third aspect, the embodiments of this application provide a battery, including a battery cell and the foregoing battery management system, where the battery management system is configured to manage charge and discharge of the battery cell and control battery energy recovery of a vehicle at a stage corresponding to the charge. The battery has an energy recovery capability, which can effectively increase the endurance mileage of electric vehicles and reduce the degradation speed of the battery.

The embodiments of this application provide a method and an apparatus for battery energy recovery, a battery management system, and a battery. Endurance mileage of electric vehicles can be effectively increased, accumulated polarization of batteries during continuous charge and discharge can be effectively suppressed in an alternate charge and discharge mode, and service life of battery pack can be significantly increased.

### BRIEF DESCRIPTION OF DRAWINGS

One or more embodiments are used as examples for description by using corresponding accompanying drawings. These example descriptions impose no limitation on the embodiments. Elements with a same reference sign in the accompanying drawings represent similar elements. Unless otherwise stated, the figures in the accompanying drawings impose no limitation on a scale.
FIG. 1 is a schematic diagram of an application scenario according to an embodiment of this application;
FIG. 2 is a schematic structural diagram of a battery management system according to an embodiment of this application;
FIG. 3 is a flowchart of a method for battery energy recovery according to an embodiment of this application;
FIG. 4 is a schematic diagram of current of a battery pack in a pulse accelerating state according to an embodiment of this application;
FIG. 5 is a schematic diagram of current of a battery pack in a pulse decelerating state according to an embodiment of this application;
FIG. 6 is a schematic diagram of current of another battery pack in a pulse accelerating state according to an embodiment of this application; and
FIG. 7 is a schematic structural diagram of an apparatus for battery energy recovery according to an embodiment of this application.

### DESCRIPTION OF EMBODIMENTS

The following describes in detail the embodiments of technical solutions in this application with reference to the accompanying drawings. The following embodiments are merely used to describe technical solutions in this application more clearly, and therefore they are merely used as examples and do not constitute a limitation on the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "comprise", "have" and any other variations thereof in the specification, the claims and the foregoing brief description of drawings of this application are intended to cover a non-exclusive inclusion.

In descriptions of the embodiments of this application, the terms "first" and "second" and the like are merely intended to distinguish between different objects, and shall not be understood as any indication or implication of relative importance or implicit indication of the quantities, specific sequence or dominant-subordinate relationship of indicated technical features. In the descriptions of the embodiments of this application, "a plurality of" means at least two unless otherwise specifically stated.

The term "embodiment" described herein means that specific features, structures or characteristics described with reference to the embodiment may be incorporated in at least one embodiment of this application. The word "embodiment" appearing in various places in the specification does not necessarily refer to a same embodiment, or an independent or alternative embodiment that is exclusive of other embodiments. Persons skilled in the art explicitly and implicitly understand that the embodiments described herein may combine with other embodiments.

In the descriptions of the embodiments of this application, the term "and/or" describes only an association relationship for describing associated objects and represents that three relationships may exist. For example, A and/or B may represent the following three cases: A alone, both A and B, and B alone. In addition, the character "/" in this specification generally indicates an "or" relationship between contextually associated objects.

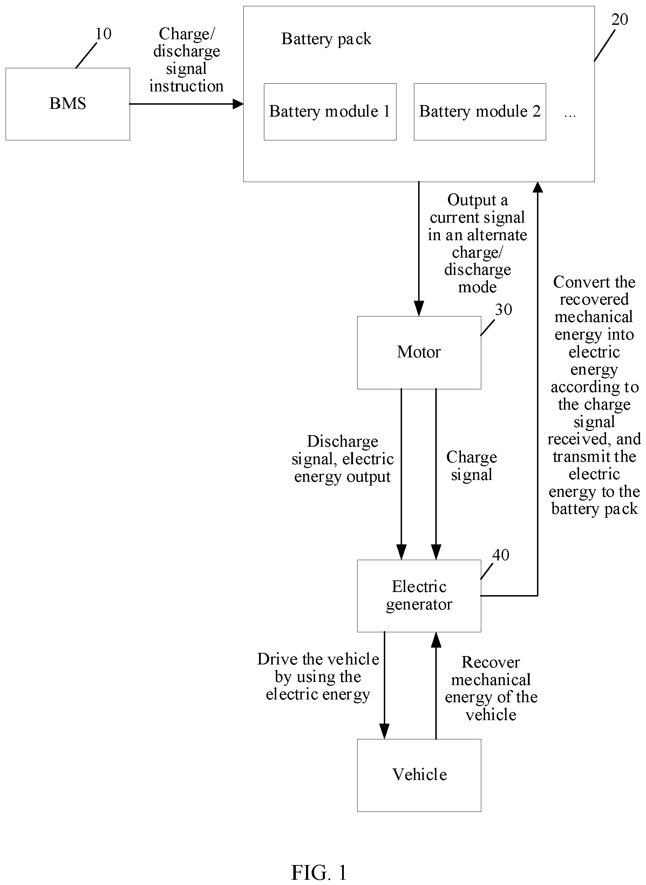

Referring to FIG. 1, FIG. 1 is a schematic diagram of an application scenario according to an embodiment of this application, to which a method and an apparatus for battery energy recovery provided in the embodiments of this application may both be applied. The application scenario includes a battery management system (Battery Management System, BMS) 10, a battery pack 20, a motor 30, an electric generator 40, and a vehicle. The battery management system 10, the battery pack 20, the motor 30, and the electric generator 40 are loaded in the vehicle as components thereof. The battery pack 20 can provide electric energy for an external electric device, and when mechanical energy of the external device is converted into electric energy, the electric energy can charge the battery pack 20. The battery pack 20 includes a battery module, and the battery module is connected to the battery management system. The battery module includes at least one battery cell. When the battery module includes a plurality of battery cells, the plurality of battery cells are connected in series and/or in parallel. The battery management system 10 is configured to: collect an operating parameter of the battery module, for example, charge/discharge current, voltage, and temperature; control charge/discharge of the battery module based on the collected operating parameter; and may further detect a state parameter of a battery based on the collected operating parameter, for example, detecting a state of charge of the battery module. The motor 30 is configured to convert electric energy into mechanical energy. The electric generator 40 is configured to convert other forms of energy into electric energy, for example, converting mechanical energy into electric energy.

In this embodiment of this application, in a whole traveling process of the vehicle, the battery management system 10 may send a charge/discharge instruction to the battery pack 20, and the battery pack 20 alternately outputs a charge signal and a discharge signal to the motor 30 according to the charge/discharge instruction when the vehicle is traveling. The motor 30 converts electric energy into mechanical energy and transmits the mechanical energy to the vehicle according to the discharge signal so as to drive the vehicle, and also transmits the mechanical energy to the electric generator 40 according to the charge signal. The electric generator 40 converts the mechanical energy into electric energy and stores the electric energy in the battery pack 20. In this way, battery energy recovery is implemented. With battery energy recovery implemented in an alternate charge and discharge mode at a charging stage, endurance mileage of the vehicle is increased and accumulated polarization of a battery during continuous charge and discharge is suppressed, thereby effectively increasing service life of the battery pack 20. The alternate charge and discharge mode includes constant current charge and constant current discharge that are alternated, and also includes charge and discharge based on pulse signals. Outputting of the pulse signals may be determined based on a traveling speed of the vehicle.

Persons skilled in the art can understand that the structure of the device shown in FIG. 1 imposes no limitation on an application scenario to which the method and the apparatus for battery energy recovery are applied, and may include more or fewer components than those show in the figure, or combine some components, or have a different component arrangement.

The following method and apparatus for battery energy recovery may be applied to the foregoing application scenario. Specifically, the method for battery energy recovery is executable by the battery management system. The apparatus for battery energy recovery may be used as a functional module of the battery management system, thereby implementing battery energy recovery.

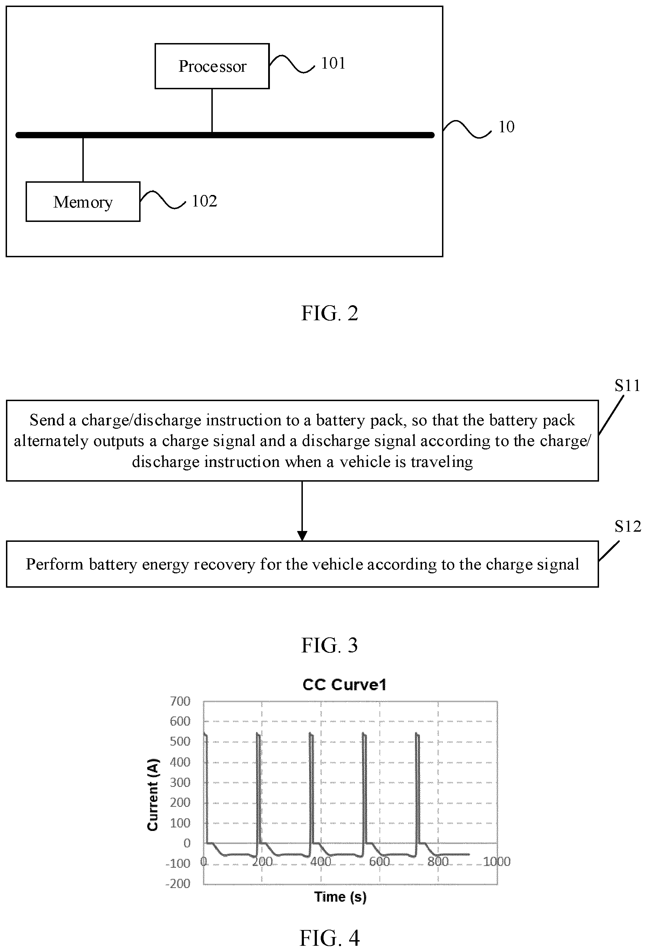

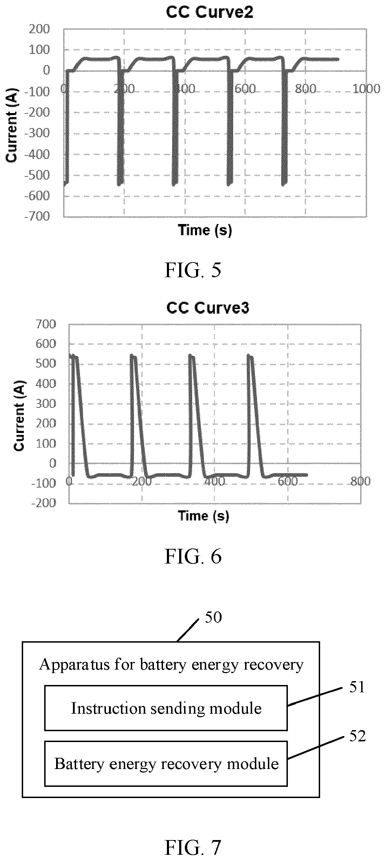

In an embodiment of this application, as shown in FIG. 2, FIG. 2 is a schematic structural diagram of a battery management system according to an embodiment of this application. The battery management system 10 includes one or more processors 101 and a memory 102, one processor 101 being used as an example in FIG. 2. The processor 101 and the memory 102 may be connected with each other through a bus or by other means, bus connection being used as an example in FIG. 2. As a non-volatile computer-readable storage medium, the memory 102 may be configured to store a non-volatile software program, a non-volatile computer-executable program, and module, for example, program instructions/modules (for example, the modules shown in FIG. 7) corresponding to the method for battery energy recovery in the embodiments of this application. By running the non-volatile software program, instruction, and module stored in the memory 102, the processor 101 executes functional applications and data processing of the battery management system, that is, implements the method for battery energy recovery in the following method embodiments. The one or more modules are stored in the memory 102. When the one or more modules are executed by the one or more processors 101, the method for battery energy recovery according to any one of the following method embodiments is performed. For example, the following method steps shown in FIG. 3 are implemented to realize functions of the modules shown in FIG. 7.

In an embodiment of this application, the battery management system 10 may further includes a display module, a wireless communications module, a collection module, an electrical device, and the like. The battery management system 10 may be configured to: intelligently manage and maintain the battery module to prevent overcharge and overdischarge of the battery module; monitor a state of the battery module and increase service life of the battery module; detect a voltage, a current, and a temperature of a battery in the battery module by using a sensor; and also perform electric leakage monitoring, calculation of remaining capacity, and alarming.

By performing the method for battery energy recovery, the battery management system 10 effectively increases endurance mileage of the vehicle and suppresses accumulated polarization of the battery during continuous charge and discharge, thereby effectively increasing the service life of the battery pack 20.

The foregoing product may use the method provided by the embodiments of this application and has corresponding functional modules for using and beneficial effects of such method. For details, refer to the method provided by the embodiments of this application.

Based on the foregoing application scenario, the following embodiments specifically describe the method for battery energy recovery of this application.

Referring to FIG. 3, FIG. 3 is a flowchart of a method for battery energy recovery according to an embodiment of this application. The method may include the following steps.

S11: Send a charge/discharge instruction to a battery pack, so that the battery pack alternately outputs a charge signal and a discharge signal according to the charge/discharge instruction when a vehicle is traveling.

S12: Perform battery energy recovery for the vehicle according to the charge signal.

As for the charge/discharge instruction, after the vehicle is activated, a main control device of the vehicle sends an instruction to a battery management system, and the battery management system sends the charge/discharge instruction to the battery pack according to the instruction, where the charge/discharge instruction is specifically sent to a battery in a battery module. The instruction is used to indicate that a battery energy recovery function is activated, and the charge/discharge instruction is used to instruct the battery to output a current signal, where the current signal may be a direct current signal or a pulse current signal.

The charge signal and the discharge signal may be a constant current charge signal and a constant current discharge signal respectively, and may further be pulse current signals. The alternately outputting a charge signal and a discharge signal means outputting a charge signal in a preset first time period and outputting a discharge signal in a preset second time period, which are performed alternately according to a preset rule. The performing alternately according to a preset rule may be: outputting the charge signal in the preset first time period first, then outputting the discharge signal in the preset second time period, and outputting the charge signal in the preset first time period again, ..., and so on; or may be: outputting the discharge signal in the preset second time period first, then outputting the charge signal in the preset first time period, and outputting the discharge signal in the preset second time period again, ..., and so on; or may be: outputting the charge signal in the preset first time period first, outputting the charge signal in the preset first time period again, then outputting the discharge signal in the preset second time period, and outputting the discharge signal in the preset second time period again, ..., and so on.

A form of alternately outputting of the charge signal and the discharge signal may be set according to a current application scenario, and the foregoing description is merely an example for explaining the alternately outputting of the charge signal and the discharge signal.

The charge signal and the discharge signal are alternately output to the motor by the battery pack, and the motor converts electric energy into mechanical energy according to the discharge signal and transmits the mechanical energy to the vehicle to drive the vehicle. The motor further transmits the mechanical energy of the vehicle to the electric generator according to the charge signal, and the electric generator converts the mechanical energy into electric energy and stores the electric energy in the battery pack. In this way, battery energy recovery is implemented.

When the vehicle is activated, when the vehicle is traveling, and when the vehicle is braked, the charge signal and the discharge signal may be alternately output, so that battery energy recovery can be implemented in any state of the vehicle. The method for battery energy recovery according to this embodiment of this application increases the endurance performance of the vehicle and alleviates degradation of the battery, thereby increasing service life of the battery.

In some embodiments, the foregoing step S11 of sending a charge/discharge instruction to a battery pack, so that the battery pack alternately outputs a charge signal and a discharge signal according to the charge/discharge instruction when a vehicle is traveling specifically includes: sending a pulse charge/discharge instruction to the battery pack, so that the battery pack alternately outputs a pulse charge signal and a pulse discharge signal according to the pulse charge/discharge instruction when the vehicle is traveling. The performing battery energy recovery for the vehicle according to the charge signal includes: performing battery energy recovery for the vehicle according to the pulse charge signal.

In this embodiment, the battery pack of the vehicle performs charging and discharging based on pulses. In a discharging stage, the battery pack outputs electric energy to drive the motor to run, and the electric energy is converted into power for the vehicle. In a charging stage, rotational mechanical energy of the vehicle is transmitted to the electric generator and is converted into electric energy, and the electric energy is stored in the battery pack. In this way, battery energy recovery is implemented.

Magnitude of a pulse signal in the pulse charge/discharge process may be fixed or preset. For example, a pulse charge/discharge logic of the battery pack may be determined according to a charging window of the battery pack. The charging window includes a pulse charge/discharge meter. The pulse charge/discharge meter may be provided by a battery manufacturer and records information such as a usable current for the battery at a given temperature and a charging capacity of the battery. A minimum pulse charging capacity of the battery pack may be used as a constant charge current for energy recovery during the pulse charge according to the charging window. One charging policy may be adopted for battery energy recovery regardless of a state of charge of the battery pack. A charging capacity of the battery recorded by the charging window is close to an upper limit of a capacity of the battery, and a pulse current may be set as close to a window value as possible, so as to maximize battery energy recovery. Optionally, if maximizing battery energy recovery is not required, the pulse current may be set to be lower and not too close to the window value. In this case, battery energy recovery can be implemented in a gentle way, and degradation speed of the battery can be effectively reduced.

In some embodiments, the magnitude of the pulse current signal in the pulse charge/discharge process may not be fixed. For example, the pulse current signal to be output may be determined according to a traveling speed of the vehicle. In this embodiment, the sending a pulse charge/discharge instruction to the battery pack, so that the battery pack alternately outputs a pulse charge signal and a pulse discharge signal according to the pulse charge/discharge instruction when a vehicle is traveling includes: obtaining speed information of the vehicle when it is traveling, and sending the pulse charge/discharge instruction to the battery pack based on the speed information, so that the battery pack alternately outputs the pulse charge signal and the pulse discharge signal based on the speed information.

That the battery pack alternately outputs the pulse charge signal and the pulse discharge signal based on the speed information includes: under a condition that the speed information indicates that the vehicle is in an accelerating state, controlling discharge power of the pulse discharge signal output by the battery pack to be greater than charge power of the pulse charge signal; under a condition that the speed information indicates that the vehicle is in a decelerating state, controlling the discharge power of the pulse discharge signal output by the battery pack to be less than the charge power of the pulse charge signal; and under a condition that the speed information indicates that the vehicle is in a constant speed state, controlling the discharge power of the pulse discharge signal output by the battery pack to be equal to the charge power of the pulse charge signal.

Outputting of the pulse discharge signal and the pulse charge signal is determined according to the accelerating state, the decelerating state, and the constant speed state of the vehicle respectively, so that the output pulse discharge signal and pulse charge signal match a current traveling state of the vehicle. In this way, battery energy recovery can be implemented, the degradation of the battery can be alleviated, and current electric energy consumption of the vehicle can match the traveling state of the vehicle, thereby improving performance of the vehicle and ensuring driving experience of a user.

In some embodiments, under the condition that the vehicle is in the accelerating state or the decelerating state, when the vehicle reaches a target speed, the battery management system may further control the discharge power of the pulse discharge signal output by the battery pack to be equal to the charge power of the pulse charge signal. After the vehicle accelerates or decelerates to the target speed and the vehicle is traveling at a constant speed, a pulse signal output in this case is consistent with a constant-speed traveling state of the vehicle. The target speed may be a relatively stable driving speed of the vehicle maintained for a given period of time. In this embodiment of this application, the vehicle can be controlled to travel at a constant speed after it reaches the target speed, with its charge and discharge to be kept in a target state based on the target speed. In the target state, capacity discharged at constant current can just meet the needs of the vehicle. In this way, not only the endurance mileage of electric vehicles can be effectively increased, but also the service life of the battery pack is significantly increased.

For example, when an electric vehicle needs to be accelerated, a status of an accelerator pedal is monitored, an acceleration demand of the electric vehicle is determined according to an acceleration instruction of the accelerator pedal, and a method for pulse charge/discharge of a battery pack under a target operating condition is obtained. The battery pack is required to output pulse charge/discharge power, with discharge power of the battery pack to be greater than charge power of the battery pack. In one pulse cycle, during energy recovery of the battery pack, driving acceleration of the electric vehicle is greater than deceleration acceleration of the electric vehicle, thereby implementing acceleration of the electric vehicle. When the electric vehicle accelerates and reaches a target speed, a charge/discharge method of the battery pack of the electric vehicle is switched. In a new pulse charge/discharge method, pulse discharge power is equal to pulse charge power, and the electric vehicle is traveling at an equivalent constant speed. For example, when the electric vehicle needs to be decelerated, a state of a brake pedal is monitored, a deceleration demand of the electric vehicle is determined according to a deceleration instruction of the brake pedal, and the method for the pulse charge/discharge of the battery pack under the target operating condition is obtained. The battery pack is required to output the pulse charge/discharge power, with the charge power of the battery pack to be greater than the discharge power of the battery pack. In one pulse cycle, during the energy recovery of the battery pack, the deceleration acceleration is greater than the driving acceleration of the electric vehicle, thereby implementing deceleration of the electric vehicle. When the electric vehicle decelerates and reaches a target speed, the charge/discharge method of the battery pack of the electric vehicle is switched. In a new pulse charge/discharge method, the pulse charge power is equal to the pulse discharge power, and the electric vehicle is traveling at the equivalent constant speed.

The alternate charge and discharge based on pulse signals not only improves endurance mileage of the vehicle but also effectively suppresses the degradation of the battery during continuous charge and discharge, thereby significantly increasing the service life of the battery. In addition, a minimum charging capacity of the battery pack is used to determine a charging policy for energy recovery, which greatly reduces a risk that the battery is charged beyond the charging window, reduces a risk of exacerbating the degradation of the battery, and effectively increases the service life of the battery.

The pulse charge signal and the pulse discharge signal are alternately output. Specifically, the alternately outputting the pulse charge signal and the pulse discharge signal may include:
according to pulse charge and pulse discharge, and/or
pulse charge, pulse discharge, and standing, determining at least one alternate charge/discharge pattern; and
sending the at least one alternate charge/discharge pattern to the battery pack, so that the battery pack outputs the pulse charge signal and the pulse discharge signal according to the at least one alternate charge/discharge pattern.

For example, the pulse charge/discharge process may be, but is not limited to the following cycling patterns: (1). pulse charge → pulse discharge → pulse charge → pulse discharge...; (2). pulse charge → pulse discharge → standing → pulse charge → pulse discharge → standing...; (3). pulse current 1 charge → pulse current 2 charge → pulse current 1 discharge → pulse current 2 discharge...; or (4). pulse current 1 charge → standing → pulse current 2 charge —> standing —> pulse current 1 discharge —> standing —> pulse current 2 discharge —> standing... For example, referring FIG. 4 to FIG. 6, FIG. 4 is a schematic diagram of current of a battery pack in a pulse accelerating state, with the horizontal axis representing time and the vertical axis representing current value. The charge power is greater than the discharge power, and the battery pack that has been charged will be left standing before being discharged. FIG. 5 is a schematic diagram of current of a battery pack in a pulse decelerating state, with the horizontal axis representing time and the vertical axis representing current value. The discharge power is greater than the charge power, and the battery pack that has been discharged will be left standing before being charged. FIG. 6 is a schematic diagram of current of a battery pack in a pulse accelerating state, with the horizontal axis representing time and the vertical axis representing current value. The battery pack is charged and discharged without standing.

In this embodiment of this application, pulse charge/discharge processes may be diversified, and the pulse charge or discharge may be performed in steps at different rates. In this way, the accumulated polarization of batteries during continuous charge and discharge can be effectively suppressed, and the pulse charging performance is improved, thereby improving the energy recovery efficiency and increasing the service life of batteries. In addition, the method may be flexibly applied to different application scenarios.

In some embodiments, in addition to battery energy recovery implemented in a pulse charge/discharge mode, battery energy recovery may be implemented in a constant current charge and constant current discharge mode. The sending a charge/discharge instruction to a battery pack, so that the battery pack alternately outputs a charge signal and a discharge signal according to the charge/discharge instruction when a vehicle is traveling specifically includes: sending a constant current charge/discharge instruction to the battery pack, so that the battery pack alternately outputs a constant current charge signal and a constant current discharge signal according to the constant current charge/discharge instruction when the vehicle is traveling. The performing battery energy recovery for the vehicle according to the charge signal includes: performing battery energy recovery for the vehicle according to the constant current charge signal. Such alternate constant current charge and constant current discharge mode can also increase the endurance mileage of the vehicle, reduce the degradation speed of the battery, and increase the service life of the battery.

Referring to FIG. 7, FIG. 7 is a schematic structural diagram of an apparatus for battery energy recovery according to an embodiment of this application. The apparatus for battery energy recovery 50 includes an instruction sending module 51 and a battery energy recovery module 52. The instruction sending module 51 is configured to send a charge/discharge instruction to a battery pack, so that the battery pack alternately outputs a charge signal and a discharge signal according to the charge/discharge instruction when a vehicle is traveling; and the battery energy recovery module 52 is configured to perform battery energy recovery for the vehicle according to the charge signal.

The instruction sending module 51 is specifically configured to send a pulse charge/discharge instruction to the battery pack, so that the battery pack alternately outputs a pulse charge signal and a pulse discharge signal according to the pulse charge/discharge instruction when the vehicle is traveling. The battery energy recovery module 52 is specifically configured to perform battery energy recovery for the vehicle according to the pulse charge signal.

In some embodiments, the instruction sending module 51 is specifically configured to: obtain speed information of the vehicle when it is traveling, and send the pulse charge/discharge instruction to the battery pack based on the speed information, so that the battery pack alternately outputs the pulse charge signal and the pulse discharge signal based on the speed information. That the battery pack alternately outputs the pulse charge signal and the pulse discharge signal based on the speed information includes: under a condition that the speed information indicates that the vehicle is in an accelerating state, controlling discharge power of the pulse discharge signal output by the battery pack to be greater than charge power of the pulse charge signal; under a condition that the speed information indicates that the vehicle is in a decelerating state, controlling the discharge power of the pulse discharge signal output by the battery pack to be less than the charge power of the pulse charge signal; and under a condition that the speed information indicates that the vehicle is in a constant speed state, controlling the discharge power of the pulse discharge signal output by the battery pack to be equal to the charge power of the pulse charge signal. Under the condition that the vehicle is in the accelerating state or the decelerating state, and when the vehicle reaches a target speed, discharge power of the pulse discharge signal output by the battery pack is controlled to be equal to charge power of the pulse charge signal.

In some embodiments, the sending a pulse charge/discharge instruction to the battery pack, so that the battery pack alternately outputs a pulse charge signal and a pulse discharge signal according to the pulse charge/discharge instruction when the vehicle is traveling includes: according to pulse charge and pulse discharge, and/or pulse charge, pulse discharge, and standing, determining at least one alternate charge/discharge pattern; and sending the at least one alternate charge/discharge pattern to the battery pack, so that the battery pack outputs the pulse charge signal and the pulse discharge signal according to the at least one alternate charge/discharge pattern.

In some embodiments, the instruction sending module 51 is specifically configured to send a constant current charge/discharge instruction to the battery pack, so that the battery pack alternately outputs a constant current charge signal and a constant current discharge signal according to the constant current charge/discharge instruction when the vehicle is traveling. The battery energy recovery module 52 is specifically configured to perform battery energy recovery for the vehicle according to the constant current charge signal.

It should be noted that the apparatus for battery energy recovery may perform the method for battery energy recovery according to the embodiments of this application, and has corresponding functional modules and beneficial effects for performing such method. For technical details not described in detail in the embodiment of the apparatus for battery energy recovery, reference may be made to the method for battery energy recovery according to the embodiments of this application.

An embodiment of this application provides a non-volatile computer-readable storage medium. When the computer-readable storage medium stores a computer-executable instruction that is executed by one or more processors, for example, one processor 101 shown in FIG. 2, the one or more processors can be caused to perform the method for battery energy recovery according to any one of the foregoing method embodiments.

An embodiment of this application provides a computer program product. The computer program product includes a computer program stored in a non-volatile computer-readable storage medium, and the computer program includes a program instruction. When the program instruction is executed by a battery management system, the battery management system can be caused to perform the method for battery energy recovery according to any one of the foregoing method embodiments.

From the descriptions of the foregoing implementations, a person of ordinary skill in the art can clearly understand that the embodiments can be implemented by means of software in combination with a general hardware platform, and certainly, can also be implemented by hardware. A person of ordinary skill in the art can understand that all or part of the processes of the method in the embodiments may be implemented by a computer program instructing related hardware. The program may be stored in one computer-readable storage medium, and when the program is executed, the processes in the foregoing method embodiments may be included. The storage medium may be a diskette, an optical disk, a read-only memory (Read-Only Memory, ROM), a random access memory (Random Access Memory, RAM), or the like.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of the embodiments of this application.

## Claims

1. A method for battery energy recovery, **characterized in that** the method comprises:
sending a charge/discharge instruction to a battery pack, so that the battery pack alternately outputs a charge signal and a discharge signal according to the charge/discharge instruction when a vehicle is traveling; and
performing battery energy recovery for the vehicle according to the charge signal.

2. The method according to claim 1, **characterized in that** the sending a charge/discharge instruction to a battery pack, so that the battery pack alternately outputs a charge signal and a discharge signal according to the charge/discharge instruction when a vehicle is traveling comprises:
sending a pulse charge/discharge instruction to the battery pack, so that the battery pack alternately outputs a pulse charge signal and a pulse discharge signal according to the pulse charge/discharge instruction when the vehicle is traveling; and
the performing battery energy recovery for the vehicle according to the charge signal comprises:
performing battery energy recovery for the vehicle according to the pulse charge signal.

3. The method according to claim 2, **characterized in that** the sending a pulse charge/discharge instruction to the battery pack, so that the battery pack alternately outputs a pulse charge signal and a pulse discharge signal according to the pulse charge/discharge instruction when a vehicle is traveling comprises:
obtaining speed information of the vehicle when it is traveling, and sending the pulse charge/discharge instruction to the battery pack based on the speed information, so that the battery pack alternately outputs the pulse charge signal and the pulse discharge signal based on the speed information.

4. The method according to claim 3, **characterized in that**, that the battery pack alternately outputs the pulse charge signal and the pulse discharge signal based on the speed information comprises:
under a condition that the speed information indicates that the vehicle is in an accelerating state, controlling discharge power of the pulse discharge signal output by the battery pack to be greater than charge power of the pulse charge signal;
under a condition that the speed information indicates that the vehicle is in a decelerating state, controlling the discharge power of the pulse discharge signal output by the battery pack to be less than the charge power of the pulse charge signal; and
under a condition that the speed information indicates that the vehicle is in a constant speed state, controlling the discharge power of the pulse discharge signal output by the battery pack to be equal to the charge power of the pulse charge signal.

5. The method according to claim 4, **characterized in that**, under the condition that the vehicle is in the accelerating or decelerating state, the method further comprises:
when the vehicle reaches a target speed, controlling the discharge power of the pulse discharge signal output by the battery pack to be equal to the charge power of the pulse charge signal.

6. The method according to claim 2, **characterized in that** the sending a pulse charge/discharge instruction to the battery pack, so that the battery pack alternately outputs a pulse charge signal and a pulse discharge signal according to the pulse charge/discharge instruction when a vehicle is traveling comprises:
according to pulse charge and pulse discharge, and/or
pulse charge, pulse discharge, and standing, determining at least one alternate charge/discharge pattern; and
sending the at least one alternate charge/discharge pattern to the battery pack, so that the battery pack outputs the pulse charge signal and the pulse discharge signal according to the at least one alternate charge/discharge pattern.

7. The method according to any one of claims 1 to 6, **characterized in that** the sending a charge/discharge instruction to a battery pack, so that the battery pack alternately outputs a charge signal and a discharge signal according to the charge/discharge instruction when a vehicle is traveling comprises:
sending a constant current charge/discharge instruction to the battery pack, so that the battery pack alternately outputs a constant current charge signal and a constant current discharge signal according to the constant current charge/discharge instruction when the vehicle is traveling; and
the performing battery energy recovery for the vehicle according to the charge signal comprises:
performing battery energy recovery for the vehicle according to the constant current charge signal.

8. An apparatus for battery energy recovery, **characterized in that** the apparatus comprises:
an instruction sending module, configured to send a charge/discharge instruction to a battery pack, so that the battery pack alternately outputs a charge signal and a discharge signal according to the charge/discharge instruction when a vehicle is traveling; and
a battery energy recovery module, configured to perform battery energy recovery for the vehicle according to the charge signal.

9. A battery management system, **characterized by** comprising:
at least one processor; and
a memory communicatively connected to the at least one processor; wherein
the memory stores an instruction which is executable by the at least one processor, and when the instruction is executed by the at least one processor, the at least one processor is caused to perform the method according to any one of claims 1 to 7.

10. A battery, **characterized by** comprising a battery cell and the battery management system according to claim 9, wherein the battery management system is configured to manage charge and discharge of the battery cell and control battery energy recovery of a vehicle at a stage corresponding to the charge.
